# EUROPÄISCHE PATENTANMELDUNG

(11) **EP 1 380 885 A1**
(43) Veröffentlichungstag der Anmeldung: **14.01.2004**
(21) Anmeldenummer: 02015424.1
(22) Anmeldetag: 11.07.2002
(51) Int. Cl.: G03B 27/72

(54) **Vorrichtung und Verfahren zum Aufbelichten von digitalisierten Bildinformationen auf ein lichtempfindliches Material**

(71) Anmelder: Agfa-Gevaert AG, 51373 Leverkusen (DE)
(72) Erfinder: Klüter, Ulrich, 80339 München (DE)

(57) **Zusammenfassung**

Die Erfindung betrifft eine Vorrichtung und ein Verfahren zum Aufbelichten von in einzelne Pixel aufgeteilten Bildinformationen eines Bildes auf ein lichtempfindliches Material (12), wie ein Fotopapier, in Form von zueinander versetzten Teilbildern. Zu diesem Zweck werden von einer transmissiven Einrichtung (16) Teilbilder erzeugt, die mit Hilfe von durch eine optische Abbildungseinrichtung (26) generierten und von ihr gebündelten Lichtstrahlen durch eine Abbildungsoptik (32) telezentrisch auf das lichtempfindliche Material (12) projiziert werden.

## Beschreibung

Die Erfindung betrifft eine Vorrichtung nach dem Oberbegriff des Anspruchs 1 zum Aufbelichten von in einzelne Pixel aufgeteilten Bildinformationen eines Bildes auf ein lichtempfindliches Material in Form von zueinander versetzten Teilbildern sowie ein Verfahren nach dem Oberbegriff des Anspruchs 11 zum Aufbelichten eines Bildes auf ein lichtempfindliches Material.

Zum Aufbelichten von Bildern auf ein lichtempfindliches Material werden heutzutage überwiegend digital arbeitende Vorrichtungen eingesetzt, die nach einem Verfahren arbeiten, bei dem in einzelne Pixel aufgeteilte Bildinformationen des Bildes auf das lichtempfindliche Material aufbelichtet werden. Zu diesem Zweck wird eine aus einer Vielzahl einzeln anzusteuernder transmissiver Elemente gebildete transmissive Einrichtung, beispielsweise eine LCD-Einrichtung (liquid cristal device), eine DMD-Einrichtung (digital mirror device) oder ein entsprechender Lichtmodulator, verwendet, bei der die transmissiven Elemente entsprechend den Bildinformationen des Bildes angesteuert werden. Mit Hilfe einer optischen Abbildungseinrichtung wird das durch die ansteuerbaren Elemente der transmissiven Einrichtung dargestellte Teilbild mittels einer Vielzahl von Lichtstrahlen entlang parallel zueinander verlaufender Strahlengänge abgebildet und von einer Abbildungsoptik auf das lichtempfindliche Material projiziert.

Da die Auflösung derartiger transmissiver Einrichtungen durch die Anzahl der einzeln anzusteuernden Elemente vorgegeben ist und diese üblicherweise nicht ausreicht, um ein hoch aufgelöstes Bild in fotografischer Qualität auf das lichtempfindliche Material aufzubelichten, werden zur Erhöhung der Auflösung von der transmissiven Einrichtung sequentiell mehrere Teilbilder des Bildes erzeugt, die in der Bildebene des lichtempfindlichen Materials zueinander versetzt auf das lichtempfindliche Material aufbelichtet werden. Dabei deckt eine vor der transmissiven Einrichtung angeordnete Maske die einzeln anzusteuernden Elemente der transmissiven Einrichtung abschnittsweise so ab, dass jedes Teilbild aus einem Raster zueinander beabstandeter, einzelner, aufbelichteter Flächen gebildet ist. Um die Auflösung zu erhöhen, beispielsweise zu vervierfachen, wird eine entsprechende Anzahl von Teilbildern des Bildes versetzt zueinander auf das lichtempfindliche Material aufbelichtet.

Ein auf diesem Prinzip basierendes Verfahren sowie eine Vorrichtung zur Durchführung dieses Verfahrens ist beispielsweise aus der EP 0 987 875 bekannt. Bei diesem Verfahren werden die von der transmissiven Einrichtung sequentiell erzeugten, von einer optischen Abbildungseinrichtung durch eine Abbildungsoptik auf das lichtempfindliche Material projizierten Teilbilder mit Hilfe einer drehbaren, geneigt angeordneten Glasplatte versetzt zueinander auf das lichtempfindliche Material aufbelichtet.

Nachteilig an diesen bekannten Vorrichtungen und Verfahren ist, dass die Auflösung des auf das lichtempfindliche Material aufzubelichtenden Bildes von der Anzahl der zur Erzeugung des jeweiligen Teilbildes auf das lichtempfindliche Material aufbelichteten Flächen und somit von der Größe der von der Maske nicht bedeckten Abschnitte der einzeln anzusteuernden transmissiven Elementen der transmissiven Einrichtung abhängt. Soll das Bild auf ein vergleichsweise großformatiges lichtempfindliches Material aufbelichtet werden, hat dies zur Folge, dass durch die Vergrößerung des Bildes auf das gewünschte Format die Auflösung des Bildes geringer wird, also die nebeneinander angeordneten belichteten Flächen des Bildes gleichfalls entsprechend vergrößert werden. Hierbei kommt es insbesondere bei starken Vergrößerungen zu einer unscharfen Abgrenzung der belichteten Flächen untereinander und zu einer Überlappung benachbarter Flächen, die zu einer verminderten Bildqualität und Brillianz des Bildes führen. Eine Anpassung der Auflösung des Bildes an das Format des lichtempfindlichen Materials ist allerdings nur durch Austauschen der optischen Abbildungseinrichtung, der Maske und der transmissiven Einrichtung möglich.

Der Erfindung liegt nun die Aufgabe zugrunde, eine Vorrichtung bzw. ein Verfahren zum Aufbelichten eines Bildes auf ein lichtempfindliches Material in Form von zueinander versetzten Teilbildern anzugeben, bei der bzw. durch dessen Anwendung die Auflösung des Bildes an das gewählte Format des zu belichtenden lichtempfindlichen Materials auf einfache Weise angepaßt werden kann.

Diese Aufgabe wird erfindungsgemäß gelöst durch eine Vorrichtung mit den Merkmalen nach Anspruch 1 sowie durch ein Verfahren mit den Merkmalen nach Anspruch 11. Bevorzugte Ausführungsformen sind Gegenstand von Unteransprüchen.

Bei der Erfindung werden nur die von der optischen Abbildungseinrichtung generierten Lichtstrahlen auf das lichtempfindliche Material projiziert, die zumindest annähernd achsparallel zur optischen Achse der Abbildungsoptik verlaufen. Hierdurch wird erreicht, dass nur ein Teil der durch das jeweilige Element der transmissiven Einrichtung hindurchtretenden Lichtstrahlen auf das lichtempfindliche Material projiziert werden, so dass die auf dem lichtempfindlichen Material zu belichtenden Flächen, aus denen das jeweilige Teilbild zusammengesetzt ist, eine definierte Größe besitzen und von einem scharf umgrenzten, unbelichteten Bereich umgeben sind. Die Abbildungsoptik bestimmt also aufgrund ihrer optischen Eigenschaften den Flächeninhalt jeder der das Raster des Teilbildes auf dem lichtempfindlichen Material bildenden, zu belichtenden Flächen. Somit hängt der Flächeninhalt der von den Lichtstrahlen auf dem lichtempfindlichen Material zu belichtenden Flächen nicht mehr von der die Elemente der transmissiven Einrichtung abschnittsweise abdeckenden Maske, sondern maßgeblich von den optischen Eigenschaften der Abbildungsoptik ab. Um den Lichtverlust möglichst gering zu halten, wird erfindungsgemäß ferner vorgeschlagen, die Lichtstrahlen vor dem Durchlaufen der transmissiven Einrichtung mit Hilfe der optischen Abbildungseinrichtung zu bündeln.

Durch die kombinierte Wirkung der Bündelung der Lichtstrahlen einerseits und der Abbildung von Lichtstrahlen, die zumindest annähernd parallel zur optischen Achse der Abbildungsoptik verlaufen, andererseits wird erreicht, dass die das Raster bildenden, zu belichtenden Flächen, die gemeinsam das auf das lichtempfindliche Material aufzubelichtende, jeweilige Teilbild definieren, eine definierte Größe besitzen. Soll nun bei der erfindungsgemäßen Vorrichtung die Auflösung verändert werden, beispielsweise um ein großformatiges lichtempfindliches Material zu belichten, kann durch Einstellen oder durch Austauschen der Abbildungsoptik die Anzahl der aufzubelichtenden Teilbilder reduziert oder erhöht werden, indem die Größe der auf das lichtempfindliche Material aufzubelichtenden Flächen des das jeweilige Teilbild definierenden Rasters entsprechend verändert wird.

Als Abbildungsoptik wird bei der erfindungsgemäßen Vorrichtung bevorzugt ein telezentrisches Objektiv verwendet, mit dem einerseits die oben angesprochenen Wirkungen erzielt werden können, nämlich nur Lichtstrahlen, die zumindest annähernd achsparallel zur optischen Achse des Objektives verlaufen, auf dem lichtempfindlichen Material abzubilden, und mit dem andererseits auch eine entsprechende Vergrößerung oder Verkleinerung des Teilbildes zur Anpassung an das Format des zu belichtenden Materials auf einfache Weise möglich ist.

Um möglichst scharf umrandete Flächen auf dem lichtempfindlichen Material zu belichten, ist es besonders von Vorteil, ein telezentrisches Objektiv zu verwenden, das nur Lichtstrahlen mit einem maximalen Öffnungswinkel in einem Bereich von +7° bis -7° bezogen auf die optische Achse des telezentrischen Objektivs abbildet. Besonders gute Ergebnisse lassen sich mit einem telezentrischen Objektiv erzielen, dessen Öffnungswinkel noch kleiner ist und in einem Bereich von +4,7°bis -4,7° liegt.

Des Weiteren wird vorgeschlagen, dass zwischen der Lichtquelle und der Einrichtung zum Erzeugen der Teilbilder mindestens eine einstellbare Blende zum Verändern des Lichtkegels des von der Lichtquelle abgestrahlten Lichtes sowie eine Linsenanordnung, vorzugsweise ein Kondensor, zum Sammeln und Projizieren des von der Lichtquelle durch die einstellbare Blende abgestrahlten Lichtes auf die Einrichtung zum Erzeugen der Teilbilder angeordnet ist. Mit Hilfe der Blende kann der Lichtkegel des von der Lichtquelle abgestrahlten Lichtes so eingestellt werden, dass die Größe der von der optischen Abbildungseinrichtung auf dem lichtempfindlichen Material zu belichtenden Flächen gezielt verändert werden kann. Auf diese Weise kann die Größe der zu belichtenden Flächen und damit die Anzahl der insgesamt auf das lichtempfindliche Material aufzubelichtenden Teilbilder eingestellt und somit die gewünschte Auflösung des Bildes an das Format des lichtempfindlichen Materials angepasst werden. Bevorzugt ist die einstellbare Blende hierzu mit einer Steuerung verbunden, die entsprechend dem gewählten Format den Blendenwert der Blende verändert. Mit Hilfe der vorzugsweise als Kondensor ausgebildeten Linsenanordnung wird das durch die Blende hindurchtretende Licht gesammelt und auf die Einrichtung zum Erzeugen der Teilbilder projiziert, um eine möglichst große Lichtausbeute des aus der Blende austretenden Lichtes zu erreichen.

Anstelle der zuvor beschriebenen Anordnung aus der Blende und der Linsenanordnung kann als Lichtquelle auch ein aus einer Vielzahl von LEDs gebildetes flächiges LED-Array eingesetzt werden. Damit eine geringe Größe bei den zu belichtenden Flächen eingestellt werden kann, um eine besonders hohe Auflösung beim fertigen Bild zu erreichen, wird nur ein kleiner Teil der LEDs um den Mittelpunkt des LED-Arrays eingeschaltet. Soll dagegen die Größe der zu belichtenden Flächen vergrößert und damit die Auflösung des fertigen Blides verringert werden, wird das gesamte LED-Array eingeschaltet. Auf diese Weise kann auf die oben beschriebene einstellbare Blende verzichtet werden. Um unterschiedliche Farben auf das lichtempfindliche Material aufzubelichten, ist es ferner von Vorteil, wenn ein LED-Array mit unterschiedliche Farben emittierenden LEDs eingesetzt wird, welche je nach der aufzubelichtenden Farbe getrennt voneinander angesteuert werden. Anstelle dieses mehrfarbigen LED -Arrays können auch mehrere LED-Arrays eingesetzt werden, die jeweils Licht unterschiedlicher Wellenlängen emittieren, wobei das Licht der nebeneinander angeordneten LED-Arrays mit Hilfe optischer Einheiten, beispielsweise durch Spiegel, auf die LCD-Einrichtung gelenkt wird.

Bei einer besonders bevorzugten Ausführungsform der erfindungsgemäßen Vorrichtung umfaßt die Abbildungsoptik zum Projizieren der Teilbilder auf das lichtempfindliche Material mindestens eine einstellbare Linsenanordnung und/oder mindestens eine einstellbare Blendenanordnung zum Verändern der Größe der von jedem Lichtstrahl auf dem lichtempfindlichen Material zu belichtenden Fläche. Hierdurch kann auf ein Auswechseln der Abbildungsoptik verzichtet werden, so dass mit derselben Abbildungsoptik unterschiedliche Formate des lichtempfindlichen Materials mit unterschiedlichen Auflösungen durch Verstellen der Linsen- und/oder der Blendenanordnung auf einfache Weise belichtet werden können.

Die zwischen der Lichtquelle und der transmissiven Einrichtung zum Erzeugen der Teilbilder angeordnete optische Abbildungseinrichtung weist bei einer besonders bevorzugten Ausführungsform der erfindungsgemäßen Vorrichtung eine Mikrolinsen-Matrix sowie eine zwischen der Mikrolinsen-Matrix und der transmissiven Einrichtung angeordnete Black-Matrix auf. Mit Hilfe der Black-Matrix werden die Bond-Punkte zwischen den ansteuerbaren Elementen der transmissiven Einrichtung so abgedeckt, dass die Lichtstrahlen nur einen definierten, vorgegebenen Abschnitt des jeweiligen Elementes durchlaufen können. Gleichzeitig wird durch die in Strahlrichtung vor der Black-Matrix angeordnete Mikrolinsen-Matrix erreicht, dass möglichst das gesamte von der Lichtquelle abgestrahlte Licht auf die freie Fläche des jeweiligen ansteuerbaren Elementes fokussiert wird und die durch die Black-Matrix verursachten Lichtverluste minimiert sind. Durch die kombinierte Wirkung der Mikrolinsen-Matrix mit der Black-Matrix wird somit eine maximale Lichtausbeute erreicht.

Bei einer bevorzugten Ausführungsform der erfindungsgemäßen Vorrichtung ist zum seitlichen Versetzen der auf dem lichtempfindlichen Material zu projizierenden Teilbilder die optische Abbildungseinrichtung gemeinsam mit der transmissiven Einrichtung quer zur optischen Achse der Abbildungsoptik verstellbar ausgeführt. Durch seitliches Verfahren der Anordnung kann so auf einfache Weise das jeweils auf das lichtempfindliche Material zu projizierende Teilbild verlagert werden.

Alternativ oder ergänzend hierzu wird ferner vorgeschlagen, eine optische Einrichtung zum seitlichen Versetzen der auf dem lichtempfindlichen Material zu projizierenden Teilbilder quer zur optischen Achse der Abbildungsoptik vorzusehen. Hierdurch ist ein sehr exaktes Positionieren der Teilbilder auf dem lichtempfindlichen Material möglich. Die optische Einrichtung ist dabei vorzugsweise zwischen der Abbildungsoptik und dem lichtempfindlichen Material angeordnet, wodurch sich ein verhältnismäßig einfacher Aufbau der erfindungsgemäßen Vorrichtung ergibt.

Als optische Einrichtung werden besonders bevorzugt zwei im Strahlengang der Abbildungsoptik hintereinander angeordnete optische Elemente eingesetzt, welche zueinander bewegbar gestaltet sind. Durch die Verwendung zweier hintereinander angeordneter optischer Elemente ist eine Verschiebung der Teilbilder auf dem lichtempfindlichen Material in jede beliebige Richtung möglich. Ferner kann das das jeweilige Teilbild bildende Raster aus zu belichtenden Flächen in jede Richtung verstellt werden. Bei dieser Art optischer Einrichtung ist es von besonderem Vorteil, wenn die optischen Elemente um zwei rechtwinklig zueinander verlaufende, die optische Achse der Abbildungsoptik schneidende Schwenkachsen schwenkbar sind.

Alternativ kann als optische Einrichtung eine geneigt zur optischen Achse der Abbildungsoptik verlaufende Glasplatte dienen, welche um eine mit der optischen Achse zusammenfallende Rotationsachse drehbar ist.

Gemäß einem weiteren Aspekt betrifft die Erfindung ein Verfahren mit den Merkmalen nach Anspruch 11, das zum Aufbelichten von in einzelne Pixel aufgeteilten Bildinformationen eines Bildes auf ein lichtempfindliches Material in Form von zueinander versetzten Teilbildern dient und gemäß dem insbesondere die erfindungsgemäße Vorrichtung sowie die zuvor beschriebenen Ausführungsformen betrieben werden können.

Bei einer besonders bevorzugten Variante des erfindungsgemäßen Verfahrens wird vorgeschlagen, den Flächeninhalt der von jedem Lichtstrahl auf dem lichtempfindlichen Material belichteten Fläche an das Format des lichtempfindlichen Materials derart anzupassen, dass bei dem fertig belichteten lichtempfindlichen Material allenfalls geringfügige Überlappungen zwischen benachbart belichteten Flächen auftreten. Hierdurch wird erreicht, dass für jedes zu belichtende Format des lichtempfindlichen Materials eine optimale Auflösung ausgewählt wird, bei der die belichteten Flächen unmittelbar nebeneinander angeordnet sind, sich jedoch nicht überlappen, wodurch sich ein besonders hoher Kontrast bei den fertigen Bildern erreichen läßt.

Des Weiteren wird bei dem erfindungsgemäßen Verfahren vorgeschlagen, die Anzahl der insgesamt auf das lichtempfindliche Material zu projizierenden Teilbilder in Abhängigkeit von dem Format des lichtempfindlichen Materials auszuwählen, wobei der Flächeninhalt der von den Lichtstrahlen auf dem lichtempfindlichen Material zu belichtenden Flächen für alle Formate des lichtempfindlichen Materials zumindest annähernd konstant gehalten wird. Auf diese Weise ist sichergestellt, dass für jedes Format dieselbe Auflösung eingestellt ist, so dass auch bei großformatigen Abzügen dieselbe hohe Bildqualität und Brillianz erzielt werden kann, die bei vergleichsweise kleinformatigen Abzügen möglich ist.

Weitere Merkmale und Vorteile der Erfindung ergeben sich aus der folgenden Beschreibung eines bevorzugten Anwendungsbeispieles, wobei Bezug auf die beigefügten Zeichnungen genommen wird.

Es zeigen:
- Fig. 1: eine schematische Darstellung einer erfindungsgemäßen Vorrichtung zum Aufbelichten von Bildern auf ein Fotopapier als lichtempfindliches Material;
- Fig. 2: eine Draufsicht auf einen Abschnitt des Fotopapiers, auf dem in einem Raster angeordnete aufbelichtete Flächen dargestellt sind;
- Fig. 3: eine Draufsicht auf einen Abschnitt des Fotopapiers, bei dem verglichen mit dem Raster in Fig. 2 die Flächen des Rasters vergrößert sind, das fertige Bild also eine geringe Auflösung aufweist; und
- Fig. 4: eine Draufsicht auf einen Abschnitt des Fotopapiers, bei dem mit der erfindungsgemäßen Einrichtung die Flächen des Rasters derart verstellt worden sind, dass der Flächeninhalt der Flächen dem Flächeninhalt der Flächen des in Fig. 2 gezeigten Rasters entspricht, das Bild also eine verglichen mit Fig. 3 höhere Auflösung besitzt.

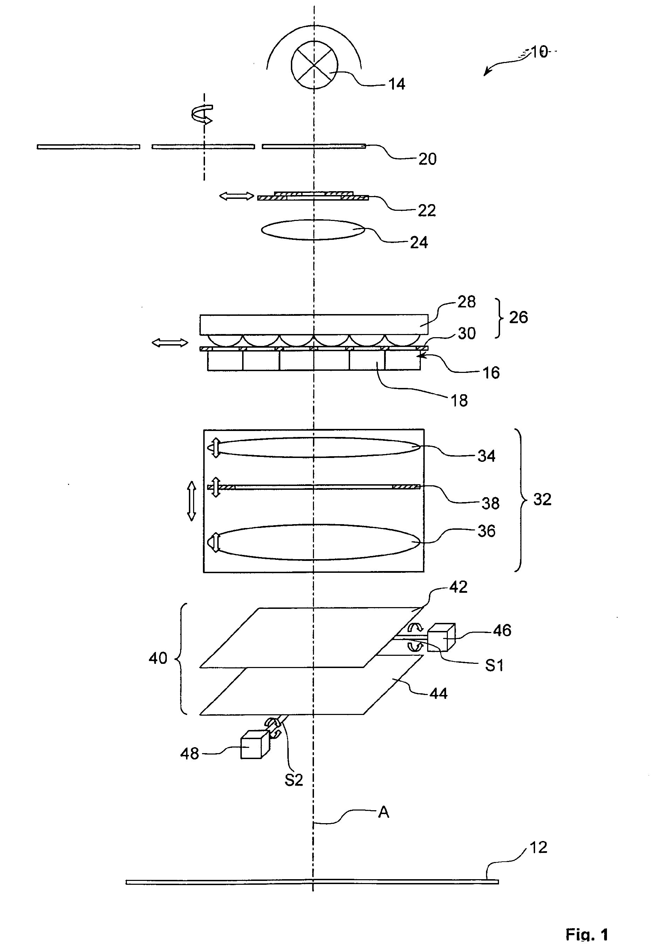

In Fig. 1 ist in schematischer Darstellung eine erfindungsgemäße Vorrichtung 10 gezeigt, mit der in einzelne Pixel aufgeteilte Bildinformationen eines Bildes auf ein Fotopapier 12 als lichtempfindliches Material in Form von zueinander versetzten Teilbildern aufbelichtet werden können.

Die Vorrichtung 10 weist eine Lichtquelle 14 auf, die zum Belichten einer transmissiven LCD-Einrichtung 16 dient. Die LCD-Einrichtung 16 ist aus einer Vielzahl flächenmäßig nebeneinander angeordneter, transmissiver LCD-Elemente 18 gebildet, die von einer nicht dargestellten Steuerung jeweils einzeln entsprechend vorgegebener, digitaler Bildinformationen des Bildes anzusteuern sind.

Zwischen der Lichtquelle 14 und der LCD-Einrichtung 16 ist ein aus mehreren Farbfiltern gebildetes Filteraggregat 20 angeordnet, dessen Zweck später noch erläutert wird.

Ferner ist zwischen dem Filteraggregat 20 und der LCD-Einrichtung 16 eine stufenlos einstellbare Blende 22 sowie ein der Blende 22 in Abstrahlrichtung der Lichtquelle 14 gesehen nachgeordneter Kondensor 24 positioniert. Mit Hilfe der Blende 22 wird der Lichtkegel des von der Lichtquelle 14 abgestrahlten Lichtes begrenzt, so dass nur Lichtstrahlen mit einem vorgegebenen Winkel bezüglich der optischen Achse A der Vorrichtung 10 auf die LCD-Einrichtung 16 abgestrahlt werden. Mit Hilfe des Kondensors 24 wird das durch die Blende 22 hindurchtretende Licht gesammelt und auf die LCD-Einrichtung 16 projiziert, um die Lichtverluste zu minimieren und um die Lichtstrahlen zusätzlich auf die LCD-Einrichtung 16 abzulenken. Die einstellbare Blende 22 ist vorzugsweise mit der zuvor beschriebenen Steuerung verbunden, die den Blendenwert der Blende 22 entsprechend einem vorgegebenen Format des lichtempfindlichen Materials 12 automatisch einstellt. Zu diesem Zweck ist es auch möglich die Blende 22 stufenweise einstellbar zu gestalten und die verschiedenen Öffnungsstufen direkt an das gewählte Format des lichtempfindlichen Formats 12 zu koppeln.

Unmittelbar angrenzend an die LCD-Einrichtung 16 ist zwischen der LCD-Einrichtung 16 und dem Filteraggregat 20 eine optische Abbildungseinrichtung 26 angeordnet. Die optische Abbildungseinrichtung 26 ist aus einer Mikrolinsen-Matrix 28 und einer sogenannten Black-Matrix 30 gebildet. Die Black-Matrix 30 liegt unmittelbar auf der Oberseite der LCD-Einrichtung 16 auf und deckt die Bond-Punkte der LCD-Elemente 18 ab. Vor jedem nicht von der Black-Matrix 30 abgedeckten Bereich ist jedem LCD-Element 18 eine der Linsen der Mikrolinsen-Matrix 28 zugeordnet. Die Linsen der Mikrolinsen-Matrix 28 bündeln die von der Lichtquelle 14 abgestrahlten und von dem jeweils eingestellten Farbfilter des Filteraggregates 20 eingefärbten Lichtstrahlen und leiten sie entlang einer Vielzahl parallel zueinander verlaufender Strahlengänge durch die LCD-Einrichtung 16, wobei jedem LCD-Element 18 ein Strahlengang zugeordnet ist.

Auf diese Weise wird ein Raster aus Lichtpunkten erzeugt, wobei jeder Lichtpunkt einem bestimmten LCD-Element 18 zugeordnet ist. Durch entsprechendes Ansteuern der LCD-Elemente 18 kann auf diese Weise ein durch das Raster der Lichtpunkte definiertes Teilbild des aufzubelichtenden Bildes erzeugt werden.

Anstelle der zuvor geschilderten Kombination aus dem Filteraggregat 20 und der LCD-Einrichtung 16 kann auch eine LCD-Einrichtung eingesetzt werden, bei der die LCD-Elemente nicht nur Helligkeitsunterschiede sondern auch Farbunterschiede darstellen können, so dass die Farbeinstellung von der LCD-Einrichtung vorgenommen wird.

In Strahlungsrichtung der Lichtquelle 14 gesehen der LCD-Einrichtung 16 nachgeordnet ist ein telezentrisches Objektiv 32 vorgesehen. Das telezentrische Objektiv 32 hat zwei Linsenanordnungen 34 und 36, zwischen denen eine Blendenanordnung 38 vorgesehen ist.

Die Linsenanordnung 34 und 36 sowie die Blendenanordnung 38 des telezentrischen Objektives 32 sind so zueinander positioniert, dass nur Lichtstrahlen, die mit einem maximalen Öffnungswinkel in einem Bereich von +4,7° bis -4,7° bezogen auf die optische Achse A des telezentrischen Objektives 32 verlaufen, vom telezentrischen Objektiv 32 abgebildet werden. Hierdurch wird erreicht, dass nur ein Teil der von der optischen Abbildungseinrichtung 26 durch die LCD-Einrichtung 16 geleiteten Lichtstrahlen tatsächlich auf das Fotopapier 12 projiziert wird, so dass die das Raster des jeweiligen Teilbildes definierenden, auf das Fotopapier 12 zu projizierenden Lichtpunkte eine vom telezentrischen Objektiv 32 eingestellte Größe besitzen.

Sowohl das telezentrische Objektiv 32, die Linsenanordnungen 34 und 36 als auch die Blendenanordnung 38 können entlang der optischen Achse A verstellt werden, um die Größe der Lichtpunkte sowie das Format des insgesamt auf das Fotopapier 12 aufzubelichtenden Bildes einzustellen. Ferner kann durch Verstellen der Blende 22 die Größe des Lichtkegels des von der Lichtquelle 14 abgestrahlten Lichtes und damit gleichfalls auch die Größe der Lichtpunkte eingestellt werden.

Zwischen dem telezentrischen Objektiv 32 und dem Fotopapier 12 ist ferner eine optische Einrichtung 40 vorgesehen, mit der die von der LCD-Einrichtung 16 erzeugten Teilbilder mit einem definierten Versatz auf das Fotopapier 12 projiziert werden können. Zu diesem Zweck weist die optische Einrichtung 40 zwei Glasplatten 42 und 44 auf. Jede Glasplatte 42 bzw. 44 ist mit einem Stellantrieb 46 bzw. 48 gekoppelt, der die Glasplatte 42 bzw. 44 um eine vorgegebene Schwenkachse S1 bzw. S2 schwenken kann. Die beiden Schwenkachsen S1 und S2 der beiden Glasplatten 42 und 44 verlaufen rechtwinklig zueinander und schneiden gleichfalls unter einem rechten Winkel die optische Achse A des telezentrischen Objektives 32.

Die beiden Glasplatten 42 und 44 sorgen dafür, dass der Strahlengang je nach Stellung der beiden Glasplatten 42 und 44 zueinander definiert parallel versetzt wird. Hierdurch kann das von der LCD-Einrichtung 16 erzeugte, jeweilige Teilbild in der Ebene des Fotopapiers 12 in einem beliebigen Bereich und um eine beliebige Strecke mit einem beliebigen Winkel verschoben werden. Durch die Kombination unterschiedlicher Kippwinkel der beiden Glasplatten 42 und 44 läßt sich jede beliebige Verschiebung realisieren.

Anstelle der zuvor geschilderten, schwenkbaren Glasplatten 42 und 44 kann als optische Einrichtung 40 auch eine geneigt zur optischen Achse A angeordnete einfache Glasscheibe (nicht dargestellt) verwendet werden, die um eine mit der optischen Achse A zusammenfallende Drehachse gedreht werden kann, um die Teilbilder zueinander zu versetzen.

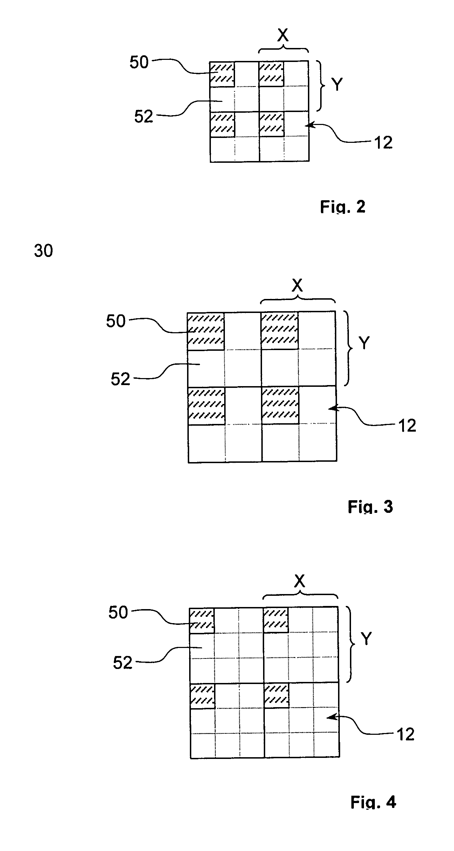

Nachfolgend wird unter Bezugnahme auf die Fig. 2 - 4 die Arbeitsweise der erfindungsgemäßen Vorrichtung 10 näher erläutert.

Soll ein Bild auf das Fotopapier 12 aufbelichtet werden, werden die digitalen Bilddaten des Bildes zunächst in einzelne Teilbilder aufgeteilt. Anschließend werden die Bilddaten eines der Teilbilder zum Ansteuern der LCD-Elemente 18 an die LCD-Einrichtung 16 übertragen. Entsprechend dem vorgegebenen Format werden anschließend das telezentrische Objektiv 32 und gegebenenfalls auch die Blende 22 so eingestellt, dass der Flächeninhalt jeder bei dem Belichtungsvorgang eines Teilbildes auf das Fotopapier 12 aufzubelichtenden Fläche 50 beispielsweise einem Viertel des insgesamt zu belichtenden Flächeninhaltes eines durch Versetzen der Teilbilder zu belichtenden Oberflächenabschnittes 52 mit den Kantenlängen X und Y des Fotopapiers 12 entspricht. Nachdem im Filteraggregat 20 die gewünschte Farbe eingestellt worden ist, wird das Teilbild auf das Fotopapier 12 aufbelichtet.

In Fig. 2 ist schematisch ein Ausschnitt des Fotopapiers 12 gezeigt, auf dem insgesamt vier das Teilbild definierende Flächen 50 auf das Fotopapier 12 aufbelichtet worden sind.

Anschließend wird für ein weiteres Teilbild im Filteraggregat 20 eine andere Farbe eingestellt und das Teilbild gegebenenfalls auf dieselben Flächen 50 projiziert.

Um auch die noch nicht belichteten Bereiche des Oberflächenabschnittes 52 zu belichten, werden nach dem Belichten der Flächen 50 die Glasplatten 42 und 44 der optischen Einrichtung 40 so verstellt, dass ein neu von den LCD-Elementen 18 generiertes Teilbild unmittelbar benachbart zu den bereits belichteten Flächen 50 belichtet wird. Dieser Vorgang wird im vorliegenden Fall viermal wiederholt, bis die Oberflächenabschnitte 52 des Fotopapiers 12 insgesamt belichtet sind.

Soll nun ein großformatiges Fotopapier 12 belichtet werden, bestand bei den bisher bekannten Vorrichtungen und Verfahren das folgende Problem. Durch die für das größere Format erforderliche Vergrößerung der Teilbilder kam es zwangsweise zu einer Vergrößerung des Flächeninhaltes der zu belichtenden Flächen 50, wie Fig. 3 zeigt. Dies führte einerseits zu einer Reduzierung der Auflösung, d. h. die einzelnen zu belichtenden Flächen 50 waren verglichen mit den zu belichtenden Flächen 50 kleinerer Formate deutlich größer, wie schematisch Fig. 3 im Vergleich zu Fig. 2 zeigt. Andererseits führte die Vergrößerung der zu belichtenden Flächen 50 zu unscharfen Übergängen zwischen den zu belichtenden Flächen 50 und den nicht zu belichtenden Bereichen, die im ungünstigsten Fall sogar Überlappungen der belichteten Flächen 50 zur Folge haben konnten.

Wie in Fig. 4 dargestellt ist, wird nun bei der erfindungsgemäßen Vorrichtung 10 durch Verstellen des telezentrischen Objektives 32 und gegebenenfalls durch Verstellen der einstellbaren Blende 22 der Flächeninhalt jeder auf das Fotopapier 12 zu belichtenden Fläche 50 so eingestellt, dass sein Flächeninhalt in etwa dem Flächeninhalt einer auf einem kleineren Format des Fotopapiers 12 zu belichtenden Fläche 50 entspricht, so wie sie in Fig. 2 gezeigt ist. Da durch die Vergrößerung die Kantenlängen X und Y des insgesamt zu belichtenden Oberflächenabschnittes 52 zunehmen, hat dies gleichzeitig zur Folge, dass insgesamt mehr Flächen 50 zur Erzeugen des Bildes auf dem Fotopapier 12 zu belichten sind.

Bei den in den Fig. 2 und 4 gezeigten Beispielen wurde in Fig. 2 der Oberflächenabschnitt 52 insgesamt vier Mal belichtet, während in Fig. 4 der Oberflächenabschnitt 52 insgesamt neun Mal zu belichten ist.

Mit Hilfe der erfindungsgemäßen Vorrichtung 10 und dem erfindungsgemäßen Verfahren kann nun die Größe der jeweils zu belichtenden Flächen 50 unabhängig vom Vergrößerungsfaktor konstant gehalten werden, so dass auf einfache Weise auch bei großformatigen Fotopapieren 12 Bilder mit einer hohen Auflösung belichtet werden können.

Anstelle der zuvor beschriebenen Anordnung aus der Blende 22 und dem Kondensor 24 kann als Lichtquelle 14 auch ein aus einer Vielzahl von LEDs gebildetes flächiges LED-Array eingesetzt werden. Bei diesem LED-Array kann eine geringe Größe bei den zu belichtenden Flächen eingestellt werden, um eine besonders hohe Auflösung beim fertigen Bild zu erreichen, indem nur ein kleiner Teil der LEDs um den Mittelpunkt des LED-Arrays eingeschaltet wird. Soll dagegen die Größe der zu belichtenden Flächen vergrößert und damit deren Anzahl in dem fertigen Bildes verringert werden, wird das gesamte LED-Array eingeschaltet. Auf diese Weise kann auf die oben beschriebene einstellbare Blende 22 verzichtet werden.

Um unterschiedliche Farben auf das lichtempfindliche Material 12 aufzubelichten, ist es auch möglich ein LED-Array einzusetzen, das aus Gruppen von LEDs zusammengesetzt ist, die jeweils Licht unterschiedlicher Wellenlängen emittieren und je nach der aufzubelichtenden Farbe getrennt voneinander angesteuert werden. Hierdurch kann auf das Filteraggregat 20 verzichtet werden. Anstelle dieses mehrfarbigen LED-Arrays können auch mehrere LED-Arrays eingesetzt werden, die jeweils Licht unterschiedlicher Wellenlängen emittieren, wobei das Licht der unterschiedlichen LED-Arrays mit Hilfe optischer Einheiten in einem Strahlengang vereinigt und auf die LCD-Einrichtung gelenkt wird.

## Patentansprüche

1. Vorrichtung zum Aufbelichten von in einzelne Pixel aufgeteilten Bildinformationen eines Bildes auf ein lichtempfindliches Material (12) in Form von zueinander versetzten Teilbildern, mit
einer transmissiven Einrichtung (16) zum Erzeugen der auf den Bildinformationen basierenden Teilbilder des Bildes,
einer Lichtquelle (14) zum Generieren von Lichtstrahlen, welche zum Abbilden der Teilbilder durch die transmissive Einrichtung (16) verlaufen,
einer optischen Abbildungseinrichtung (26) zum Leiten der von der Lichtquelle (14) zu generierenden Lichtstrahlen entlang einer Vielzahl parallel zueinander verlaufender Strahlengänge durch die transmissive Einrichtung (16) sowie
einer Abbildungsoptik (32) zum Projizieren der die Teilbilder abbildenden Lichtstrahlen auf das lichtempfindliche Material (12), **dadurch gekennzeichnet, dass** die optische Abbildungseinrichtung (26) die Lichtstrahlen vor dem Durchlaufen der transmissiven Einrichtung (16) bündelt und
dass die Abbildungsoptik (32) nur die gebündelten Lichtstrahlen auf das lichtempfindliche Material (12) projiziert, welche zumindest annähernd achsparallel zur optischen Achse (A) der Abbildungsoptik (32) verlaufen.

2. Vorrichtung nach Anspruch 1, **dadurch gekennzeichnet, dass** die Abbildungsoptik ein telezentrisches Objektiv (32) ist.

3. Vorrichtung nach Anspruch 2, **dadurch gekennzeichnet, dass** das telezentrische Objektiv (32) nur Lichtstrahlen mit einem maximalen Öffnungswinkel in einem Bereich von +7° bis -7° bezogen auf die optische Achse (A) des telezentrischen Objektivs (32), besonders bevorzugt in einem Bereich von +4,7° bis -4,7° abbildet.

4. Vorrichtung nach Anspruch 1, 2 oder 3, **dadurch gekennzeichnet, dass** die Abbildungsoptik (32) mindestens eine einstellbare Linsenanordnung (34, 36) und/oder mindestens eine einstellbare Blendenanordnung (38) zum Verändern der Größe der von jedem Lichtstrahl auf dem lichtempfindlichen Material (12) zu belichtenden Fläche (50) umfaßt.

5. Vorrichtung nach einem der Ansprüche 1 bis 4, **dadurch gekennzeichnet, dass** zwischen der Lichtquelle (14) und der Einrichtung (16) zum Erzeugen der Teilbilder mindestens eine einstellbare Blende (22) sowie eine Linsenanordnung, vorzugsweise ein Kondensor (24), angeordnet ist.

6. Vorrichtung nach einem der Ansprüche 1 bis 5, **dadurch gekennzeichnet, dass** die zwischen der Lichtquelle (14) und der Einrichtung (16) zum Erzeugen der Teilbilder angeordnete optische Abbildungseinrichtung (26) eine Mikrolinsen-Matrix (28) sowie eine zwischen der Mikrolinsen-Matrix (28) und der transmissiven Einrichtung (16) angeordnete Black-Matrix (30) aufweist.

7. Vorrichtung nach einem der Ansprüche 1 bis 6, **dadurch gekennzeichnet, dass** die optische Abbildungseinrichtung (26) gemeinsam mit der transmissiven Einrichtung (16) zum seitlichen Versetzen der auf dem lichtempfindlichen Material (12) zu projizierenden Teilbilder quer zur optischen Achse (A) der Abbildungsoptik (32) verstellbar ist.

8. Vorrichtung nach einem der Ansprüche 1 bis 7, **dadurch gekennzeichnet, dass** eine optische Einrichtung (40) zum seitlichen Versetzen der auf dem lichtempfindlichen Material (12) zu projizierenden Teilbilder quer zur optischen Achse (A) der Abbildungsoptik (32), vorzugsweise zwischen der Abbildungsoptik (32) und dem lichtempfindlichen Material (12), angeordnet ist.

9. Vorrichtung nach Anspruch 8, **dadurch gekennzeichnet, dass** als optische Einrichtung (40) zwei im Strahlengang der Abbildungsoptik (32) hintereinander angeordnete optische Elemente (42, 44) dienen, welche bewegbar, vorzugsweise um zwei rechtwinklig zueinander verlaufende, die optische Achse (A) der Abbildungsoptik (32) schneidende Schwenkachsen (S1, S2) schwenkbar sind.

10. Vorrichtung nach Anspruch 8, **dadurch gekennzeichnet, dass** als optische Einrichtung (40) eine geneigt zur optischen Achse (A) der Abbildungsoptik (32) verlaufende Glasplatte dient, welche um eine mit der optischen Achse (A) zusammenfallende Rotationsachse drehbar ist.

11. Verfahren zum Aufbelichten von in einzelne Pixel aufgeteilten Bildinformationen eines Bildes auf ein lichtempfindliches Material (12) in Form von zueinander versetzten Teilbildern, mit den Schritten:
Erzeugen der Teilbilder durch eine transmissive Einrichtung (16),
Generieren von Lichtstrahlen,
Leiten der Lichtstrahlen entlang einer Vielzahl parallel zueinander verlaufender Strahlengänge durch die transmissive Einrichtung (16) zum Abbilden der Teilbilder sowie
Projizieren der die Teilbilder abbildenden Lichtstrahlen auf das lichtempfindliche Material (12), **dadurch gekennzeichnet, dass** die Lichtstrahlen vor dem Durchlaufen der transmissiven Einrichtung (16) entlang der Strahlengänge gebündelt werden und
dass die gebündelten Lichtstrahlen telezentrisch auf das lichtempfindliche Material (12) projiziert werden.

12. Verfahren nach Anspruch 11, **dadurch gekennzeichnet, dass** der Flächeninhalt der von jedem Lichtstrahl auf dem lichtempfindlichen Material (12) belichteten Fläche (50) an das Format des lichtempfindlichen Materials (12) derart angepaßt wird, dass bei dem fertig belichteten lichtempfindlichen Material (12) allenfalls geringfügige Überlappungen zwischen benachbart belichteten Flächen (50) auftreten.

13. Verfahren nach Anspruch 11 oder 12, **dadurch gekennzeichnet, dass** in Abhängigkeit des Formates des lichtempfindlichen Materials (12) die Anzahl der insgesamt auf das Material (12) zu projizierenden Teilbilder ausgewährt wird, wobei der Flächeninhalt der von den Lichtstrahlen auf dem lichtempfindlichen Material (12) zu belichtenden Flächen (50) für alle Formate des lichtempfindlichen Materials (12) zumindest annähernd konstant gehalten wird.
